# EUROPÄISCHE PATENTSCHRIFT

(11) **EP 2 650 618 B1**
(45) Veröffentlichungstag und Bekanntmachung des Hinweises auf die Patenterteilung: **23.09.2020**
(21) Anmeldenummer: 13001619.9
(22) Anmeldetag: 28.03.2013
(51) Int. Cl.: F24F 12/00, F24F 7/08

(54) **Dezentrales Lüftungsgerät**
Decentralised ventilating device
Appareil de ventilation décentralisé

(30) Priorität: 10.04.2012 DE 102012007001
(43) Veröffentlichungstag der Anmeldung: 16.10.2013
(73) Patentinhaber: EMCO Klima GmbH, 49811 Lingen/Ems (DE)
(72) Erfinder: Bolkenius, Frank, 49809 Lingen (DE); Winkelhaus, Matthias, 49808 Lingen (DE)
(74) Vertreter: Kalkoff & Partner Patentanwälte PartmbB

(56) Entgegenhaltungen:
- DE-A1- 4 002 560
- DE-C1- 10 022 354
- JP-A- H07 151 344
- JP-A- 2007 078 193

## Beschreibung

Die Erfindung betrifft ein dezentrales Lüftungsgerät zur Versorgung eines Raumes oder Aufenthaltsbereichs, wobei die Möglichkeit der Lufttemperierung über einen Rohr-Lamellen-Wärmetauscher des Lüftungsgerätes besteht.

Bei herkömmlichen Lüftungsgeräten dieser Art wird die Zuluft- und die Sekundärluftführung vor dem Wärmetauscher vereint, der dann von einem Mischluftstrom durchströmt wird. Zuluft und Sekundärluft werden über separate Gebläse oder durch zumindest ein Gebläse und eine Induktionsöffnung für Sekundärluft angesaugt, wobei die beiden Luftströme, insbesondere bei zwei Gebläsen, sich gegenseitig beeinflussen können. Für die Sekundärluftansaugung ist ein Querstromgebläse vorteilhaft. Querstromgebläse werden zur Sekundärluftförderung in Heiz- und Kühlsystemen eingesetzt, da sie den Vorteil bieten, große Luftmengen mit geringer Schallemission zu fördern. Diese verfügen über einen breiteren Ansaugbereich, der die Luft mit geringer Geschwindigkeit ansaugt und daher zugluftarm arbeiten kann. Allerdings sind derartige Querstromgebläse druckanfällig. Bei Beeinflussung beispielsweise durch die Vereinigung mit einem weiteren Luftstrom kann die über das Querstromgebläse geförderte Luftmenge unter Umständen stark gemindert werden. Ein Ausgleich dieser Luftmengenminderung muss dann durch Anhebung der Drehzahl erfolgen, was zu deutlich erhöhten Schallemissionen führt und somit contraproduktiv ist.

Die Druckschrift JP 2007 078 193 A offenbart eine Klimaanlage aufweisend einen Wärmetauscher sowie einen Querstromventilator innerhalb eines gemeinsamen Gehäuses. Dabei hat das Klimagerät nur einen einzigen Luftstromweg, durch den die an einem Lufteinlass angesaugte Raumluft zunächst am gesamten Wärmetauscher vorbei zum Querstromventilator und weiter zum Luftauslass geleitet wird. Um mittels des Klimageräts die Raumluft, beispielsweise eines Badezimmers, erwärmen zu können, wird durch den Wärmetauscher erhitztes Wasser gepumpt.

Die Druckschrift DE 100 22 354 C1 zeigt einen rekuperativen Vertikalflurraumlüfter zur dezentralen Wohnraumlüftung mit Wärmerückgewinnung. Dabei weist der Vertikalflurraumlüfter ein vertikal langgestrecktes, isoliertes Gehäuse mit einer Außendämmwand als Gebäudeaußenwand auf, sodass der Vertikalflurraumlüfter beispielsweise unterhalb eines Fensters bzw. einer Fensterbank verbaut werden kann. Das Gehäuse hat ein Schied, das es über die gesamte Länge in einen Zuluftkanal und einen Abluftkanal vertikal aufteilt. Der Abluftkanal und der Zuluftkanal werden von Wärmerohren durchdrungen, die schwach zur Horizontalen in Richtung des Zuluftkanals ansteigen, um Kondenswasser ableiten zu können. Dabei sind mehrere Wärmerohre untereinander angeordnet und durchgehend gestaltet, sodass diese sowohl den Zuluftkanal, als auch den Abluftkanal durchdringen. Im Inneren der Wärmerohre befindet sich ein konvertibles Wärmeträgermedium. Ein Einlass für Außenluft und ein Austrag der Fortluft sind unter dem äußeren Fensterbrett angeordnet. Im Bereich des Einlasses und des Austrags sind jeweils ein Tangentialventilator angeordnet, die zwar drehsinngleich, aber mit gegensätzlicher Förderrichtung ausgebildet sind. Ein lenkbarer Zuluftaustritt aus dem Zuluftkanal mittels einer Walze in den Raum sowie der Ablufteintritt in den Abluftkanal erfolgt unter der Raumwand nahe dem Flurboden unter einem Heizkörper.

Die Druckschrift DE 40 02 560 A1 offenbart ein Klimagerät für einen einzelnen Raum nach dem Oberbegriff des Anspruchs 1, in dessen Gehäuse ein Abluftkanal und ein Frischluftkanal über einen einzigen Kreuzstrom-Wärmetauscher geführt sind. In beiden Kanälen ist ein Gebläse angeordnet.

Der Erfindung liegt daher die Aufgabe zugrunde, ein dezentrales Lüftungsgerät anzugeben, das bei Beibehaltung der gewünschten Vorteile die negative gegenseitige Beeinflussung einzelner Teilsysteme vermeidet. Diese Aufgabe wird durch ein Lüftungsgerät mit den Merkmalen des Anspruchs 1 gelöst.

Durch die Verwendung eines Querstromgebläses und dessen Anordnung im Wesentlichen parallel zu den Rohren des Rohr-Lamellen-Wärmetauschers, so dass sich die Luftführung parallel zu den senkrecht zu den Rohren stehenden Wärmeleitlamellen erstreckt, bilden die Wärmeleitlamellen Kanäle und damit einen Teil der Sekundärluftführung aus. (Unter Rohr-Lamellen-Wärmetauscher im Sinne der Erfindung wird dabei ein Wärmetauscher verstanden, über dessen Länge sich ein Bündel paralleler Kühl- bzw. Heizmedium führender Rohre erstreckt, die durch zu den Rohren senkrechte und zueinander wiederum parallele Wärmeleitlamellen gehalten und beabstandet sind, zwischen denen die zu temperierende Luft hindurchgeführt wird. Derartige Wärmetauscher werden wegen ihrer häufigen Werkstoffpaarung von Kupferrohren mit Aluminiumwärmeleitlamellen häufig auch als Cu-Al-Wärmetauscher bezeichnet, wobei für das erfindungsgemäße Funktionsprinzip die gewählten Werkstoffe unerheblich sind und es vielmehr lediglich auf die Bildung von Luftführungskanälen durch die Wärmeleitlamellen ankommt.) Es muss lediglich sichergestellt werden, dass die Sekundärluft bis unmittelbar an den Wärmetauscher herangeleitet wird. Außerdem muss der mit Wärmeleitlamellen bestückte Bereich des Wärmetauschers länger als die Luftzuführungsbreite des Querstromgebläses ausgestaltet sein, so dass ein verbleibender zweiter Teil des Wärmetauschers verbleibt, der der Luftführung der Zuluft dient. Die Zuluft wird dann erfindungsgemäß benachbart zu der Sekundärluft bis unmittelbar an den Wärmetauscher herangeleitet, so dass auch die Zuluft in den zweiten Teilbereich des Wärmetauschers durch dessen Lamellen geführt wird. Dadurch kommt es zu keiner Vermischung des Zuluftstroms mit dem Sekundärluftstrom vor dem Wärmetauscher und somit keine gegenseitige Beeinflussung der Luftströme. Die Luftstrommengen können daher einfach und unmittelbar über die Drehzahl der beiden Gebläse (Querstromgebläse zur Sekundärluftführung und Zuluftgebläse) geregelt werden. Dennoch laufen beide Luftströme über denselben Wärmetauscher, wodurch der Installationsaufwand im Lüftungsgerät insbesondere für die Zufuhrt des Kühl- bzw. Heizmediums minimiert wird, jedoch ohne dass sich die einzelnen Luftströme vor der Temperierung im Wärmetauscher vermischen.

Bevorzugt wird das dezentrale Lüftungsgerät als Unterflurgerät mit einem obenseitigen Abdeckrost ausgebildet. Teile des Gerätes, die nicht mit dem Abdeckrost belegt sind, können sich dabei vollständig unterhalb des Fußbodens oder in einer benachbarten Wand befinden. Das erfindungsgemäße Lüftungsgerät eignet sich jedoch bei entsprechender Ausgestaltung auch zur Installation im Deckenbereich oder in einer Außenwand. Auch kann es vor einer Wand, unter, neben, über einem Fenster oder fensterunabhängig angebracht werden.

Das Lüftungsgerät ist zusätzlich mit einer Abluftführung ausgestattet, die sich bevorzugt über zwei Ebenen erstreckt, wobei sich der Ansaugbereich neben dem Wärmtauscher - bei einem Unterflurgerät ebenfalls im Bereich des Abdeckrostes - befindet und der Abluftstrom eine Umlenkung über ein Abluftgebläse erfährt zu einem Ausblasbereich in einer zweiten Ebene. Diese zweite Ebene ist bei einem Unterflurgerät in der Regel unter der ersten Ebene anzuordnen. Bevorzugt und raumsparend befindet sich die zweite Ebene der Abluftführung zumindest teilweise unterhalb der Sekundärluftführung. Ein Abluftauslass kann außenwandseitig unterhalb des Querstromgebläses angeordnet sein.

Bevorzugt ist das Zuluftgebläse und/oder das Abluftgebläse - sofern vorhanden - als Radialgebläse ausgebildet. Diese können raumsparend in Bereichen des Lüftungsgerätes untergebracht werden, die sich nicht unmittelbar neben oder unterhalb eines Raumluftauslasses, beispielsweise des Gitterrostes befinden müssen. Auch ist dadurch eine Umlenkung durch beliebige Gehäusebereiche des Lüftungsgerätes möglich.

Bei vorhandener Abluftführung kann mit Vorteil ein Wärmerückgewinner eingesetzt werden, über den sich sowohl die Zuluft- als auch die Abluftführung erstrecken, um Temperaturgradienten zwischen Zuluft und Abluft zu nutzen und nicht unbenutzt wieder an die Außenluft abzugeben. Da das Lüftungsgerät mit den vorzugsweise beschriebenen Anordnungen kompakt baut, können bei Bedarf auch einer oder mehrere Filter leicht untergebracht werden, ohne Abmessungen des Gerätes gegenüber herkömmlichen Geräten zu erhöhen.

Weitere Vorteile und Einzelheiten ergeben sich aus den Ansprüchen sowie einem in den Zeichnungen dargestellten Ausführungsbeispiel der Erfindung, das im Folgenden beschrieben wird; es zeigen:
- Fig. 1: ein erfindungsgemäßes Lüftungsgerät in perspektivischer Darstellung ohne Abdeckrost,
- Fig. 2: den Gegenstand aus Fig. 1 in rückwärtiger Ansicht, ohne Lamellen des Wärmetauschers mit schematisch dargestellten Luftströmen,
- Fig. 3: den Gegenstand aus Fig. 1 mit abgenommenem Gehäusedeckel,
- Fig. 4: den Gegenstand aus Fig. 3 mit abgenommener seitlicher Gehäusewandung,
- Fig. 5: einen Schnitt durch den Gegenstand aus Fig. 4 in Ebene V-V,
- Fig. 6: einen Schnitt durch den Gegenstand aus Fig. 5 in Ebene VI-VI,
- Fig. 7: eine Draufsicht auf den Gegenstand aus Fig. 3 zur Verdeutlichung der Luftwege und
- Fig. 8: einen Schnitt in Richtung VIII-VIII durch den Gegenstand aus Fig. 7.

Bei dem erfindungsgemäßen dezentralen Lüftungsgerät handelt es sich bevorzugt um ein Unterflurgerät zur Installation im Fußboden. Das Gerät gliedert sich in zwei Gehäusebereiche, von denen einer 1 unter dem begehbaren Fußboden angeordnet und der zweite Gehäusebereich 2 außenwandnah sich bis zum Fußboden erstreckt und durch einen Abdeckrost abgedeckt wird, der in den Figuren nicht dargestellt ist, um die darunterliegenden Bauelemente zeigen zu können.

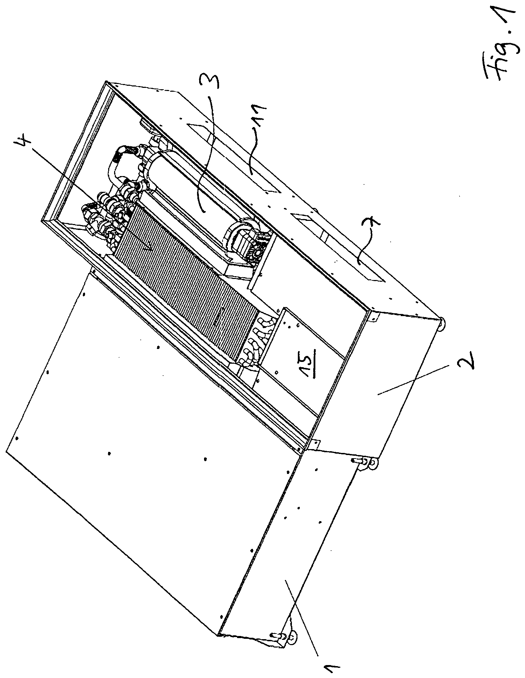

In Fig. 1 ist unter dem nicht dargestellten Abdeckrost insbesondere ein Querstromgebläse 3 zur Sekundärluftführung und ein parallel dazu angeordneter Rohr-Lamellen-Wärmetauscher 4 mit Lamellen dargestellt.

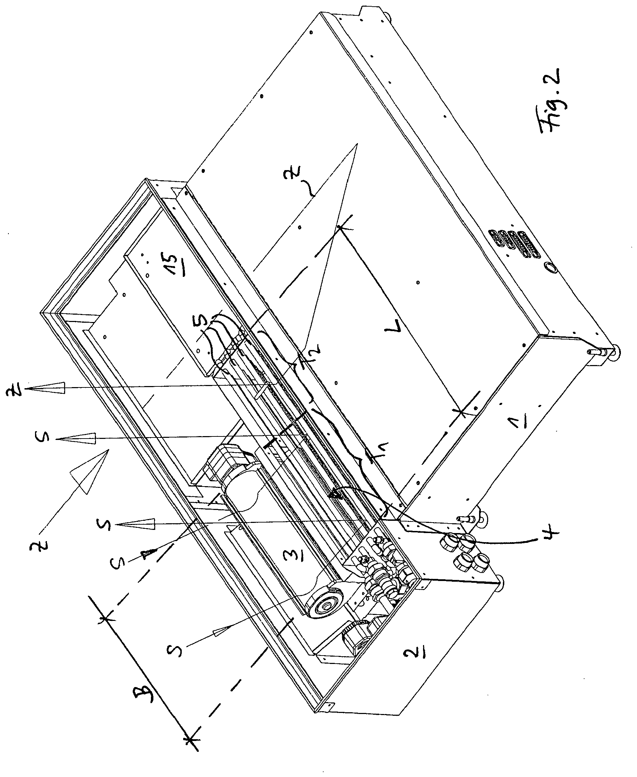

Fig. 2 zeigt schematisch die Luftflüsse, wobei Sekundärluft S entlang der entsprechenden Pfeile im außenwandnahen Bereich des Gehäuseteils 2 von dem Querstromgebläse 3 durch den nicht dargestellten Abdeckrost angesaugt und nach Durchströmen eines Teilbereichs T1 des Wärmetauschers 4 wieder auf der dem zu belüftenden Raum zugewandten Seite des Abdeckrostes an den Raum abgegeben wird. Der Übersichtlichkeit halber sind in dieser Zeichnung und den folgenden Darstellungen die Wärmeleitlamellen des Wärmetauschers 4 nicht dargestellt, so dass lediglich die Rohre 5 zu sehen sind. Die Länge L des mit Wärmeleitlamellen versehenen Bereichs des Wärmetauschers 4 ist größer als die Breite B des Querstromgebläses, so dass neben dem Querstromgebläse ein zweiter Teilbereich T2 des Wärmetauschers 4 verbleibt, der für die Zuluftführung Z zur Verfügung steht. Die Zuluft Z wird dabei durch einen eine Zulufteintrittsöffnung 7 von der Gebäudeaußenseite über ein Zuluftgebläse angesaugt, umgeleitet und durch den verbleibenden Teil T2 des Wärmetauschers 4 geführt neben dem Sekundärluftstrom S dem Raum zugeführt.

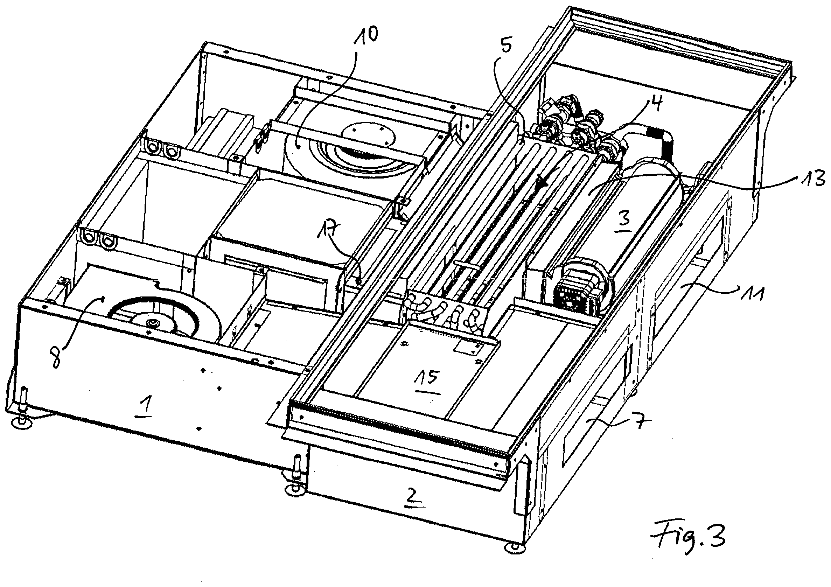

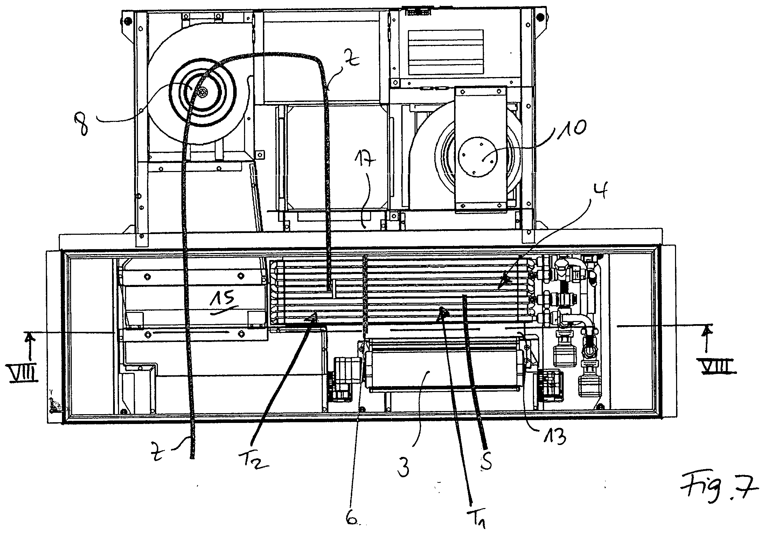

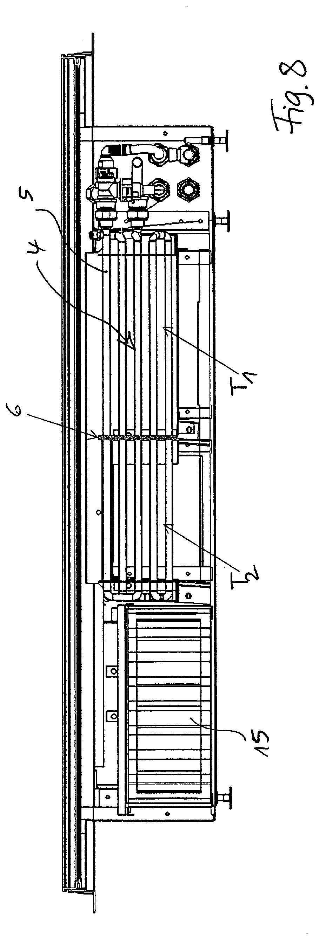

Vom Querstromgebläse 3 erstreckt sich ein Kanalbereich 13 bis unmittelbar zum Teilbereich T1 des Wärmetauscher 4. Auch die Zuluftführung Z erfolgt über einen Kanalbereich 17 bis unmittelbar an den Wärmetauscher 4 heran, nämlich an den Teilbereich T2, bei der dargestellten Ausführungsform jedoch von der anderen Seite des Wärmetauschers 4 aus, siehe Fig. 3. Mit der Sekundärluft S wird daher lediglich der erste Teilbereich T1 des Wärmetauschers 4 beaufschlagt, während die Zuluft Z durch einen zweiten Teilbereich T2 des Wärmetauschers 4 geleitet wird. Die Luftführung wird nachfolgend anhand der weiteren Figuren näher verdeutlicht. Siehe dazu auch Fig. 7 und 8, in denen eine einzige Lamelle 6 des Wärmetauschers 4 dargestellt ist, die im Wärmetauscher 4 die Zuluft Z und Sekundärluftführung S trennt.

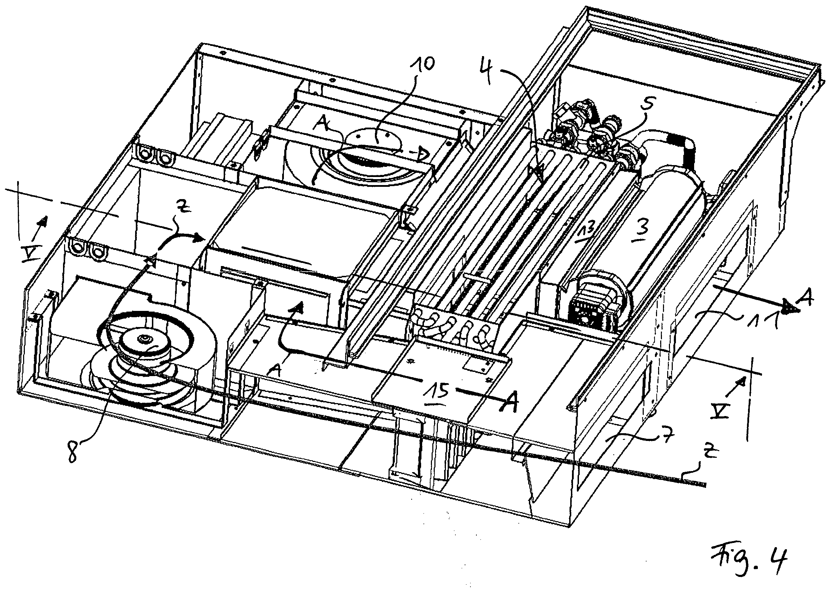

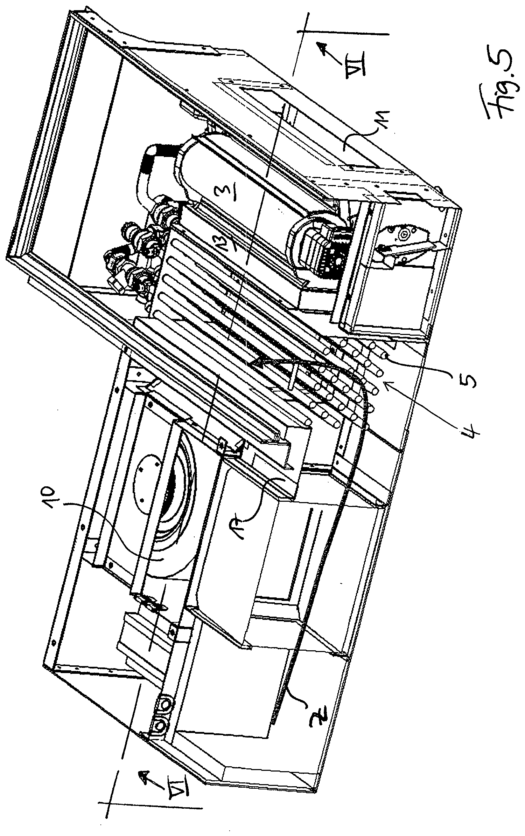

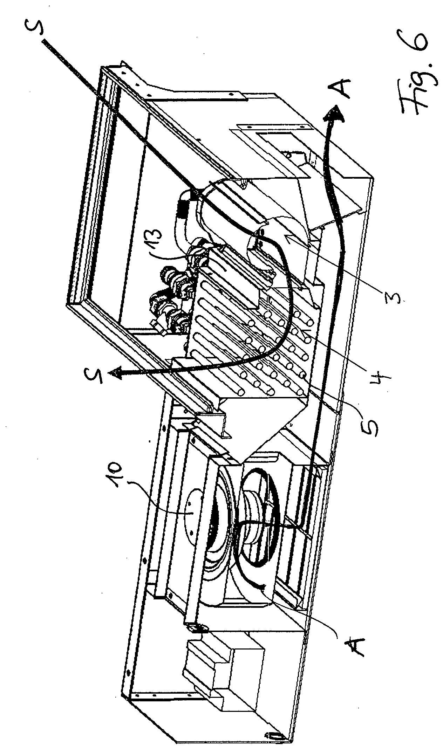

Fig. 4 zeigt den ersten Teil der Zuluftführung Z durch die Zulufteintrittsöffnung 7. Die Zuluft Z wird dabei bevorzugt über ein Radialgebläse 8 angesaugt, umgeleitet und wie Fig. 5 zeigt dem zweiten Teilbereich T2 des Wärmetauschers 4 zugeführt. Eine Abluftführung A ist ebenfalls in Fig. 4 erkennbar, wo die Abluft A durch einen Bereich des Abdeckrostes neben dem Wärmetauscher 4 und dem Querluftgebläse 3 über ein Abluftgebläse 10, das ebenfalls als Radialgebläse ausgebildet ist, angesaugt und unterhalb des Wärmetauschers 4 und des Querstromgebläses 3 durch eine Abluftausblasöffnung 11 an die Außenumgebung abgegeben wird. Dies ist auch in Fig. 6 dargestellt und erkennbar. Insbesondere lässt sich der Zusammenschau von Fig. 4 und Fig. 6 entnehmen, dass die Abluftführung A sich zunächst nach Ansaugung durch den Abdeckrost in einer ersten (hier oberen) Geräteebene erstreckt und nach Verlassen des Abluftradialgebläses 10 in einer zweiten (hier unteren) Ebene durch das Gerät geleitet wird. Auf besonders vorteilhafte Weise ist in der Zuluft- Z und der Abluftführung A ein Wärmerückgewinner 15 eingesetzt, dessen obenseitige Wärmeleitplatte von der Abluft überströmt wird, während in dem darunterliegenden Bereich der anderen Ebene die angesaugte Zuluft Z ebenfalls durch den Wärmerückgewinner 15 oder an diesem entlang geleitet wird, um die zuzuführende Zuluft Z vorzutemperieren.

Durch den Einsatz der Radialgebläse 8,10 für die Zuluft- Z und Abluftführung A können diese platzsparend in dem Gehäusebereich 1 angeordnet werden, der sich unter dem Fußboden befindet und daher den nutzbaren Raum in keiner Weise beeinträchtigt.

Das erfindungsgemäße Lüftungsgerät zeichnet sich durch kompakte Baumaße, eine gute Regelbarkeit der Luftströme, Zugluftarmut, einen leisen Betrieb und hohe Energieeffizienz bei geringen Herstellungs- und Einbaukosten aus.

## Patentansprüche

1. Dezentrales Lüftungsgerät mit einer Zuluftführung (Z) zum Zuführen von Zuluft von einer Gebäudeaußenseite in einen Raum, einer Sekundärluftführung (S) zum Ansaugen von Luft aus dem Raum und wieder Zuführen in den Raum, einem Wärmetauscher (4), einem Querstromgebläse (3) zur Sekundärluftführung (S), wobei das Lüftungsgerät zusätzlich eine Abluftführung (A) zum Abführen von Luft aus dem Raum an die Außenluft aufweist, **dadurch gekennzeichnet, dass** der Wärmetauscher ein Rohr-Lamellen-Wärmetauscher ist, das Querstromgebläse sich über eine Teillänge (T1) des Wärmetauschers (4) erstreckt und derart senkrecht zu den Lamellen des Wärmetauschers (4) angeordnet ist, dass die Lamellen eine Luftwegtrennung bilden und den Sekundärluftstrom (S) von dem Zuluftstrom (Z) abtrennen, der über denselben Wärmetauscher (4), jedoch neben dem Sekundärluftstrom (S) über die verbleibende Teillänge (T2) des Wärmetauschers (4) geleitet wird, wodurch die Sekundärluftführung (S) sich durch den einen Teilbereich (T1) des Wärmetauschers (4) und die Zuluftführung (Z) sich davon getrennt durch den anderen Teilbereich (T2) des Wärmetauschers (4) erstreckt, sodass sich die beiden Luftströme (Z, S) in der Zuluftführung (Z) und in der Sekundärluftführung (S) vor dem Wärmetauscher (4) nicht vermischen und es zu keiner gegenseitigen Beeinflussung der Luftströme (Z, S) kommt.

2. Lüftungsgerät nach Anspruch 1, **dadurch gekennzeichnet, dass** es als Unterflurgerät mit einem obenseitigen Abdeckrost ausgebildet ist.

3. Lüftungsgerät nach einem der vorausgehenden Ansprüche, **gekennzeichnet durch** eine Abluftführung (A), mit einem Ansaugbereich neben dem Wärmetauscher (4) in einer ersten Ebene, einer Umlenkung über ein Abluftgebläse (10) und einem Ausblasbereich in einer zweiten Ebene.

4. Lüftungsgerät nach Anspruch 3, **dadurch gekennzeichnet, dass** sich die zweite Ebene der Abluftführung (A) zumindest teilweise unterhalb der Sekundärluftführung (S) erstreckt.

5. Lüftungsgerät nach Anspruch 3 oder 4, **dadurch gekennzeichnet, dass** das Abluftgebläse (10) ein Radialgebläse ist.

6. Lüftungsgerät nach einem der vorausgehenden Ansprüche, **gekennzeichnet durch** ein Radialgebläse (8) zur Zuluftstromführung.

7. Lüftungsgerät zumindest nach Anspruch 2, **dadurch gekennzeichnet, dass** Abluft- (10) und Zuluftgebläse (8) in einem dem Abdeckrost benachbarten Gehäusebereich angeordnet sind.

8. Lüftungsgerät zumindest nach Anspruch 3, **gekennzeichnet durch** einen Wärmerückgewinner (15), über den sich die Zuluft- (Z) und die Abluftführung (A) erstreckt.

## Claims

1. A decentralized ventilation device with a supply air guide (Z) for supplying supply air from outside of a building into a room, a secondary air guide (S) for drawing air out of the room and resupplying it into the room, a heat exchanger (4), a crossflow blower (3) for a secondary air guide (S), wherein the ventilation device additionally has an exhaust air guide (A) for discharging air from the room to the outside air, **characterized in that** the heat exchanger is a tube fin heat exchanger, the crossflow blower extends over a partial length (T1) of the heat exchanger (4) and is arranged perpendicular to the fins of the heat exchanger (4) such that the fins form an air path divider and divide the secondary air flow (S) from the supply air flow (Z) that is conducted through the same heat exchanger (4), although adjacent to the secondary airflow (S), through the remaining partial length (T2) of the heat exchanger (4), wherein the secondary air guide (S) extends through one partial region (T1) of the heat exchanger (4), and the supply air guide (Z) extends separately therefrom through the other partial region (T2) of the heat exchanger (4) so that the two air flows (Z, S) do not mix in the supply air guide (Z) and in the secondary air guide (S) in front of the heat exchanger (4), and a mutual influence of the airflows (Z, S) does not occur.

2. The ventilation device according to claim 1, **characterized in that** it is designed as a subfloor unit with a top side grating.

3. The ventilation device according to one of the preceding claims, **characterized by** an exhaust air guide (A) with an intake area next to the heat exchanger (4) in a first level, a deflection through an exhaust air blower (10) and a blowing-out region in a second level.

4. The ventilation device according to claim 3, **characterized in that** the second level of the exhaust air guide (A) extends at least partially below the secondary air guide (S).

5. The ventilation device according to claim 3 or 4, **characterized in that** the exhaust air blower (10) is a radial blower.

6. The ventilation device according to one of the preceding claims, **characterized by** a radial blower (8) for guiding a supply air flow.

7. The ventilation device at least according to claim 2, **characterized in that** the exhaust air blower (10) and the supply air blower (8) are arranged in a housing region adjacent to the grating.

8. The ventilation device at least according to claim 3, **characterized by** a heat recuperator (15) through which the supply air guide (Z) and the exhaust air guide (A) extend.

## Revendications

1. Appareil de ventilation décentralisé comprenant une conduite d'air d'admission (Z) destinée à guider de l'air d'admission à partir d'un côté extérieur de bâtiment vers une pièce, une conduite d'air secondaire (S) destinée à aspirer de l'air à partir de la pièce et à le renvoyer vers la pièce, un échangeur de chaleur (4), une soufflerie à courant transversal (3) vers la conduite d'air secondaire (S), dans lequel l'appareil de ventilation présente en outre une conduite d'air sortant (A) destinée à évacuer de l'air à partir de la pièce vers l'air extérieur, **caractérisé en ce que** l'échangeur de chaleur est un échangeur de chaleur à tubes-ailettes, la soufflerie à courant transversal s'étend sur une longueur partielle (T1) de l'échangeur de chaleur (4), étant ainsi disposée perpendiculairement aux ailettes de l'échangeur de chaleur (4),**en ce que** les ailettes forment une séparation de trajet d'air et séparent le flux d'air secondaire (S) du flux d'air d'admission (Z), lequel est guidé par le même échangeur de chaleur (4), mais à côté du flux d'air secondaire (S) sur la longueur partielle restante (T2) de l'échangeur de chaleur (4), moyennant quoi la conduite d'air secondaire (S) s'étend à travers l'une des régions partielles (T1) de l'échangeur de chaleur (4) et la conduite d'air d'admission (Z) s'étend séparément à travers l'autre région partielle (T2) de l'échangeur de chaleur (4), de telle façon que les deux flux d'air (Z, S) dans la conduite d'air d'admission (Z) et dans la conduite d'air secondaire (S) ne se mélangent pas en amont de l'échangeur de chaleur (4) et que les flux d'air (Z, S) ne s'influencent pas mutuellement.

2. Appareil de ventilation selon la revendication 1, **caractérisé en ce que** celui-ci est conçu comme un appareil souterrain avec une grille de recouvrement sur le côté supérieur.

3. Appareil de ventilation selon l'une des revendications précédentes, **caractérisé par** une conduite d'air sortant (A) comprenant une région d'aspiration à côté de l'échangeur de chaleur (4) dans un premier plan, une déviation par le biais d'une soufflerie d'air sortant (10) et une région d'échappement dans un deuxième plan.

4. Appareil de ventilation selon la revendication 3, **caractérisé en ce que** le deuxième plan de la conduite d'air sortant (A) s'étend au moins partiellement sous la conduite d'air secondaire (S).

5. Appareil de ventilation selon la revendication 3 ou 4, **caractérisé en ce que** la soufflerie d'air sortant (10) est une soufflerie radiale.

6. Appareil de ventilation selon l'une des revendications précédentes, **caractérisé par** une soufflerie radiale (8) vers la conduite d'air d'admission.

7. Appareil de ventilation selon la revendication 2, **caractérisé en ce que** la soufflerie d'air sortant (10) et la soufflerie d'air d'admission (8) sont disposées dans une région de boîtier adjacente à la grille de recouvrement.

8. Appareil de ventilation selon la revendication 3, **caractérisé par** un récupérateur de chaleur (15) par lequel s'étendent la conduite d'air d'admission (Z) et la conduite d'air sortant (A).
